(19) Europäisches Patentamt
European Patent Office
Office européen des brevets

(11) **EP 1 979 270 B1**

(12) **EUROPÄISCHE PATENTSCHRIFT**

(45) Veröffentlichungstag und Bekanntmachung des Hinweises auf die Patenterteilung:
**30.03.2011 Patentblatt 2011/13**

(21) Anmeldenummer: **07818981.8**

(22) Anmeldetag: **13.10.2007**

(51) Int Cl.:
*C01B 17/765* (2006.01)     *C01B 17/80* (2006.01)
*B01J 8/06* (2006.01)

(86) Internationale Anmeldenummer:
**PCT/EP2007/008910**

(87) Internationale Veröffentlichungsnummer:
**WO 2008/052649 (08.05.2008 Gazette 2008/19)**

(54) **VORRICHTUNG ZUR KATALYTISCHEN OXIDATION VON SO2-HALTIGEN GASEN MIT SAUERSTOFF**

APPARATUS FOR THE CATALYTIC OXIDATION OF SO2-CONTAINING GASES BY MEANS OF OXYGEN

DISPOSITIF POUR L'OXYDATION CATALYTIQUE DE GAZ CONTENANT DU SO2 AVEC DE L'OXYGÈNE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.10.2006 DE 102006051899**

(43) Veröffentlichungstag der Anmeldung:
**15.10.2008 Patentblatt 2008/42**

(60) Teilanmeldung:
**10172657.8 / 2 256 085**

(73) Patentinhaber: **Bayer Technology Services GmbH 51368 Leverkusen (DE)**

(72) Erfinder:
• **ERKES, Bernd**
  **41379 Brüggen (DE)**
• **KÜRTEN, Martin**
  **51465 Bergisch Gladbach (DE)**
• **HAVERKAMP, Verena**
  **51467 Bergisch Gladbach (DE)**

(56) Entgegenhaltungen:
**EP-A- 0 572 053      EP-A- 0 715 886
DE-A1- 19 531 630    GB-A- 1 504 725**

**Beschreibung**

Die Erfindung betrifft eine Vorrichtung umfassend mindestens einen Röhrenkontaktapparat, dem eine oder mehrere Kontaktstufen und ein oder mehrere Absorber nachgeschaltet sind, wobei der Röhrenkontaktapparat ein stehender Wärmetauscher aus mehreren Doppelmantelrohren ist, die ein Innenrohr und ein Außenrohr aufweisen, wobei ein Katalysator in den Innenrohren eingefüllt ist und die Wärmeübertragung um diese Innenrohre durch ein im Gleichstrom geführtes Medium im Zwischenraum aus Innen- und Außenrohr erfolgt. Die Erfindung betrifft ferner die Verwendung der erfindungsgemäßen Vorrichtung zur kontinuierlichen katalytischen kompletten oder teilweisen Oxidation eines Ausgangsgases enthaltend Schwefeldioxid und Sauerstoff.

Im Stand der Technik wird üblicherweise Schwefelsäure in der großtechnischen Anlage nach dem so genannten Doppelkontaktverfahren in einem Reaktor aus einem oder mehreren Katalysator enthaltenden Kontaktstufen hergestellt (beschrieben z.B. in Ullmanns Encyclopedia of Industrial Chemistry). Die Oxidation $SO_2$ + ½ $O_2$ -> $SO_3$ erfolgt üblicherweise katalytisch z.B. an einem Vanadiumpentoxid Katalysator mit oder ohne Cäsium in einem Temperaturfenster von T = 380°C - 650 °C. Es ist weiterhin bekannt, dass bei T < 340°C - 380 °C der Katalysator nicht die erforderliche Zündtemperatur erreicht und dass er bei T > 630°C - 650 °C irreversibel geschädigt wird. Über einen $SO_2$-Gehalt von 13,5 Vol. % hinaus in einer klassischen Kontaktstufe ist außerdem bekannt, dass die Reaktion so exothermisch ist, dass der Katalysator so genannte Hot-Spots bildet und irreversibel geschädigt wird. Um nun den Erfordernissen des Katalysators zu entsprechen, werden daher die dem Stand der Technik entsprechenden Anlagen zur Vermeidung der irreversiblen Schädigung des Katalysators bei T < 640°C mit $SO_2$-Gehalten < 13,5 Vol. % im Ausgangsgas betrieben. Außerdem um sicher zu gehen, dass der Katalysator in einem adiabat gemäß dem Stand der Technik geführten Prozess anspringt, muss die Ausgangsgaseintrittstemperatur T > 380 °C und die $SO_2$-Gehalte bei > ca. 5 Vol. % liegen.

Zur katalytischen Oxidation von Ausgangsgasen mit $SO_2$ > 13,5 Vol. % wurde z. B. vorgeschlagen, das Ausgangsgas vor der Aufgabe auf den Katalysator zunächst mit Luft zu verdünnen und entsprechend größere Gasvolumina durch die Anlage zu führen. Insbesondere in der Anwendung pyrometallurgischer Abgase als schwefeldioxidreiche Ausgangsgase mit $SO_2$-Gehalten von 20 - 66 Vol. % wäre ein großer Verdünnungsfaktor erforderlich mit der Folge unverhältnismäßig hoher Kosten.

DE-OS 2026818 beschreibt ein Verfahren, bei dem die Ausgangsgase vor Eintritt in die erste Kontaktstufe mit aus Oleum ausgetriebenem $SO_3$ und zusätzlicher Verdünnungsluft auf eine $SO_2$-Konzentration von 10-20 Gew. % verdünnt werden. Nachteilig hierbei sind der kostenmäßig hohe Aufwand und der spezifisch geringe $SO_2$-Umsatz in der ersten Kontaktstufe.

DE-10249782 beschreibt ein Verfahren zur Herstellung von Schwefelsäure auf Basis konzentrierter Ausgangsgase $SO_2$ > 13,5 Vol. % in einem Reaktor mit mehreren Kontaktstufen, das mit relativ geringen Mengen an Verdünnungsluft gefahren werden kann. Die Verdünnung in der ersten Kontaktstufe wird durch Rückführung eines teiloxidierten Gasstroms erreicht. Aus einer der letzten Hauptkontaktstufe vorgeschalteten Kontaktstufen wird ein Teilstrom des $SO_2$ / $SO_3$-haltigen Gases abgezogen. Dieser Teilstrom wird mit dem Ausgangsgas ($SO_2$-Gehalt von mehr als 13 Vol. %) zu einem Kontaktgas vermischt, so dass der $SO_2$-Gehalt <13 Vol. % liegt (zur sicheren Vermeidung einer Überhitzung des Katalysators) und in die erste Kontaktstufe geführt werden kann. Hierbei erfolgt eine Verlagerung des thermodynamischen Gleichgewichts der Reaktion $SO_2$ + 1/2$O_2$ <=> $SO_3$ in Richtung der Edukte, wodurch eine Überhitzung des Katalysators vermieden wird. Nachteilig an diesem Verfahren ist der hohe apparative Aufwand.

GB1504725A offenbart eine Vorrichtung und ein Verfahren zur Herstellung von Schwefeltrioxid aus technisch reinem Schwefeldioxid und technischem Sauerstoff in einem röhrenförmigen Wärmetauscher. Aus der Beschreibung (Seite 2 Zeile 17) geht hervor, dass der Wärmetauscher einen äußeren Mantel aufweist, in dem das Wärmeübertragungsmedium geführt wird, und ein inneres, katalysatorgefülltes Rohr umfasst, dem Wärme mittels des Wärmeübertragungsmedium zugeführt oder von dem Wärme abgeführt werden kann. GB 1504725A offenbart, dass der Wärmetauscher mehr als ein Reaktionsrohr umfassen kann; es ist jedoch nicht offenbart, wie ein Wärmetauscher mit mehreren Reaktionsrohren beschaffen ist. Weiterhin ist nicht offenbart, inwieweit das beschriebene Reaktorkonzept mit bereits bestehenden Kontaktanlagen verknüpft werden kann, um die Kapazität bestehender Anlagen auf Ausgangsgase mit erhöhten SO2-Konzentrationen zu erweitern.

Insbesondere in metallurgischen Prozessen und den hier resultierenden Abgasen aber auch für Kapazitätserweiterungen bestehender Schwefelsäureanlagen mit Schwefelverbrennung ergibt sich die Notwendigkeit wirtschaftlicher Verfahren zur Behandlung von Ausgangsgasen mit $SO_2$-Konzentrationen > 13,5 Vol. % unter Beibehaltung der Volumenströme und damit der Hydraulik.

In einer Vielzahl von chemischen Prozessen, in denen Schwefelverbindungen eingesetzt werden, wird außerdem ein wirtschaftliches und ökologisches Verfahren zur Behandlung von Ausgangsgasen mit $SO_2$ < 5 Vol. %, auch mit stark schwankenden Konzentrationen benötigt.

Es bestand daher die Aufgabe, einerseits die kostengünstige Herstellung von Schwefelsäure für konzentrierte Ausgangsgase mit Schwefeldioxidgehalten > 13,5 Vol. % zu ermöglichen und andererseits ein wirtschaftlich ökologisches Verfahren für schwefeldioxidhaltige Abgase ($SO_2$ < 5 Vol. %) aus diversen chemischen Prozessen zur Verfügung zu stellen.

Diese Aufgabe wird durch eine Vorrichtung gemäß Anspruch 1 gelöst. Ein erster Gegenstand der vorliegenden Erfindung ist daher eine Vorrichtung umfassend mindestens einen Röhrenkontaktapparat, dem eine oder mehrere Kontaktstufen und ein oder mehrere Absorber nachgeschaltet sind, wobei der Röhrenkontaktapparat ein stehender Wärmetauscher aus mehreren Doppelmantelrohren ist, die ein Innenrohr und ein Außenrohr aufweisen, wobei ein Katalysator in den Innenrohren eingefüllt ist und die Wärmeübertragung um diese Innenrohre durch ein im Gleichstrom geführtes Medium im Zwischenraum aus Innen- und Außenrohr erfolgt. Ein weiterer Gegenstand der vorliegenden Erfindung ist die Verwendung der genannten Vorrichtung zur kontinuierlichen katalytischen kompletten oder teilweisen Oxidation eines Ausgangsgases enthaltend Schwefeldioxid und Sauerstoff, dadurch gekennzeichnet, dass der Katalysator in den Innenrohren mit einer quasi-isothermen Prozessführung unter Energiezu- oder Energieabfuhr aktiv gehalten wird.

Bei der vorliegenden Erfindung wurde die Aufgabe durch eine quasi-isotherme Prozessführung unter Energie Zu- oder -Abfuhr, vorzugsweise über einen Zwischenkreislauf und unter Verwendung eines Röhrenkontaktapparats, gelöst. Für Ausgangsgase mit $SO_2$ > ca. 5 Vol. % wird die entstehende Reaktionswärme über einen Zwischenkreislauf kontinuierlich so abgeführt, dass sich eine quasi-isotherme Prozessführung am Katalysator, beim Einsatz eines Vanadiumpentoxidkatalysators mit oder ohne Cäsium bevorzugt in einem Temperaturfenster von T = 420 °C - 600 °C, einstellt und für Ausgangsgase mit $SO_2$ < ca. 5 Vol. % kann über den Zwischenkreislauf kontinuierlich so Wärme zugeführt werden, dass sich eine quasi-isotherme Prozessführung am Katalysator, beim Einsatz eines Vanadiumpentoxidkatalysators bevorzugt im Temperaturfenster von T = 420 °C bis 600 °C ebenfalls einstellt.

Das erfindungsgemäße Verfahren ermöglicht überraschenderweise Ausgangsgase mit einem Gehalt 0,1 < $SO_2$ < 66 Vol. % wenigstens teilweise durch Oxidation mit Sauerstoff am Katalysator zu Schwefeltrioxid umzusetzen.

Der Röhrenkontaktapparat ist ein stehender Wärmetauscher aus mehreren Doppelmantelrohren, die ein Innenrohr und ein Außenrohr aufweisen, wobei ein Katalysator in den Innenrohren eingefüllt ist und die Wärmeübertragung um diese Innenrohre/Reaktionsrohre durch ein im Gleichstrom geführtes Kühlmedium im Zwischenraum aus Innen- und Außenrohr erfolgt.

Vorzugsweise erfolgt die Energie Zu- oder -Abfuhr über einen Zwischenkreislauf.

Das sich im Prozess einstellende Temperaturfenster und insbesondere Temperaturmaximum wird innerhalb festgelegter Grenzen bezüglich der Schwefeldioxidkonzentration im Wesentlichen in der Designphase festgelegt. Wesentliche Parameter sind Gaseintrittstemperatur, Gasgeschwindigkeit, Katalysatorverdünnung, Rohrgeometrie und Kühlleistung.

Die Bedingungen im Zwischenkreislauf werden üblicherweise so eingestellt, dass der Katalysator beim Einsatz eines Vanadiumpentoxidkatalysators mit oder ohne Cäsium an keiner Stelle den schädlichen Grenzwert von 640 °C überschreitet. Bevorzugt werden die Bedingungen so eingestellt, dass sich das einstellende Temperaturprofil über die Rohrlänge so einstellt, dass die Eintrittstemperatur von 380 °C bis 450 °C, vorzugsweise 400°C bis 450°C, die Austrittstemperatur in einem Bereich von 430 °C - 500 °C und ein Temperaturmaximum bei nicht höher als 580 °C liegen. In einer bevorzugten Ausführungsform wird ein mit Cäsium dotierter Vanadiumpentoxidkatalysator mit 5-10%, bevorzugt 6-8% besonders bevorzugt mit 7,5% Anteil Cäsium für niedrige Gaseintrittstemperaturen von 360-450°C, bevorzugt 370-450°C, besonders bevorzugt 380-450°C eingesetzt.

Vorzugsweise weist der Röhrenkontaktapparat Reaktionsrohre mit Nenndurchmessern von 25 mm bis 150 mm, bevorzugt 50 mm bis 80 mm bei Rohrlängen von 1 m bis 12 m, bevorzugt 2 m bis 6 m auf.

Üblicherweise besteht der Katalysator aus einem katalytisch aktiven Metall oder Metallderivaten aufgetragen ggf. mit Promotoren auf einem Katalysatorträgermaterial. Beispielsweise ist der Katalysator $V_2O_5$ mit Kalium und Natriumsalze auf $SiO_2$ geträgert.

Zur Verbesserung des Temperaturprofils über die Schütthöhe des Katalysators wird in einer besonderen Ausführungsform der Katalysator mit einem temperaturbeständigen Inertmaterial insbesondere dem reinen Katalysatorträgermaterial, wie z. B. Glas, $SiO_2$, $Al_2O_3$ oder sonstige übliche Oxide, Keramik, Silicagel oder Zeolithe, bevorzugt Glas und Keramik, vermischt.

Üblicherweise wird der eingesetzte Katalysator in seiner Reaktivität durch Mischen mit dem Inertmaterial im Mengenverhältnis 1:100 bis 100:1 1 voreingestellt. Bevorzugt werden Inertmaterial und Katalysator in Mengenverhältnissen 90:10 bis 40:60, besonders bevorzugt 80:20 bis 40:60 vermischt.

Um die Reaktionsrohre erfolgt je nach $SO_2$-Konzentration der Eintrittsgase eine kontinuierliche Wärmeabfuhr oder Wärmezufuhr.

Da sich über die Rohrlänge abhängig von der Gasmenge, Gaseintrittstemperatur, $SO_2$-Eintrittskonzentration, dem ausgeführten Apparatedesign, wie Rohrlänge, Rohrdurchmesser, Verdünnungsgrad des Katalysators, Rohranströmung aufgrund der Kinetik ein Temperaturmaximum einstellt, kommt der Wärmeabfuhr eine besondere Bedeutung zu.

Die Führung des Kühlmediums kann in Kreuz-, Gegen- oder Gleichstrom ausgeführt werden. Aufgrund des exothermen Reaktionsverlaufs ist die vorzugsweise Ausgestaltung die Gleichstromführung. Sie bietet deutliche Vorteile in Bezug auf die sichere Vermeidung von lokalen Temperaturüberschreitungen am Katalysator und bezüglich des Massenstroms des im Kreislauf zu führenden Kühlmediums

Als Kühlmedium für die indirekte Wärmezu- und/oder abfuhr über den Zwischenkreislauf können grundsätzlich in Betracht gezogen werden: Wärmeträgeröle, Salzlösungen, Dampf, Gase und Luft. Aus Kostengründen wird Luft als Medium bevorzugt. Bei Einsatz von Luft als bevorzugtes Kühlmedium ist die Doppelmantelkonstruktion so gewählt, dass sich aufgrund der Betriebsparameter und gewählten Rohrpaarungen (Innenrohr und Außenrohr) eine Wärmeübertragungszahl (Alphawerte) von 20 bis 80 W/m$^2$K bevorzugt 40 bis 70 W/m$^2$K einstellt. In einer besonderen Ausführungsform der erfindungsgemäßen Vorrichtung wird die Temperatur im Röhrenkontaktapparat mit einem indirekt betriebenen Kühl- und/oder Aufheizerkreislauf bestehend aus einem Kühler, Gebläse oder Pumpe und/oder Anheizer eingestellt.

Die aus dem Kühlkreislaufbetrieb im Temperaturniveau von etwa 220 °C bis 550 °C bevorzugt von 300 °C bis 450 °C abzuführende Wärme kann über einen Wärmetauscher bevorzugt als Niederdruckdampf zur weiteren betrieblichen Verwendung ausgekoppelt werden.

In einer Ausführungsform der erfindungsgemäßen Vorrichtung werden mehrere Röhrenkontaktapparate in Reihe oder parallel geschaltet.

In weiteren Ausführungsformen weist die Vorrichtung dem Röhrenkontaktapparat nachgeschaltet:

- optional einen oder zwei Vorabsorber (Oleum/Zwischenabsorber),
- eine oder mehrere Kontaktstufen, optional mit einem Oleum/Zwischenabsorber
- ein Endabsorber und
- optional eine Abgasreinigungsanlage

auf.

Der Röhrenkontaktapparat kann mit einer klassischen Kontaktanlage, vorzugsweise mit einer Doppelkontaktanlage und wenigstens einem Oleum/Zwischenabsorber, einer Kontaktstufe und einem Endabsorber, kombiniert werden. In diesem Fall wird der Röhrenkontaktapparat der klassischen Doppelkontaktanlage vorgeschaltet. Für sehr hohe Eingangskonzentration an Schwefeldioxid ist vorzugsweise dem Röhrenkontaktapparat ein Vorabsorber nachgeschaltet. Die Vor-, Oleum/Zwischen- und Endabsorber entnehmen dem Gasstrom das produzierte SO$_3$. Die Gase, deren Schwefeldioxideintrittskonzentrationen mit Hilfe des erfindungsgemäßen Verfahren auf 5 bis 13 Vol. % reduziert wurden, können in der nachgeschalteten Doppelkontaktanlage gemäß dem Stand der Technik weiterbehandelt werden.

Werden Röhrenkontaktapparat und eine klassische Kontaktanlage aus einer oder mehreren Kontaktstuffen gekoppelt, wird sinnvollerweise in dem Röhrenkontaktapparat bzgl. der chemischen Zusammensetzung der gleiche Katalysator eingesetzt wie in den Kontaktstufen der Kontaktanlage.

Erfindungsgemäß kann das Verfahren, abhängig von der zugrunde zulegenden SO$_2$-Eingangskonzentration im Ausgangsgas und von der Art der benötigten Anlage also Neuanlage oder Nachrüsten einer bestehenden Anlage, in unterschiedlichen Konzepten realisiert werden.

Bei Ausgangsgasen mit bis zu 5 Vol. % Schwefeldioxid kann, falls erforderlich, der Vanadiumpentoxidkatalysator mit oder ohne Cäsium durch kontinuierliche Wärmezufuhr über den indirekten Aufheizkreislauf auf eine für die Reaktion günstige Temperatur von 450 °C bis 580 °C gehalten werden. Das entstandene SO$_3$ wird in einem Endabsorber gemäß dem Stand der Technik vom Schwefeltrioxid befreit. Der nicht umgesetzte Anteil an Schwefeldioxid kann in einer Endgaswäsche z. B. katalytisch an nasser Aktivkohle oder anderen gängigen Verfahren auf die geforderten gesetzlichen Emissionsgrenzwerte endgereinigt werden.

Bei Ausgangsgasen mit weniger als 5 Vol. % Schwefeldioxid ermöglicht das erfindungsgemäße Verfahren in einem quasi-isotherm betriebenen Röhrenkontaktapparat, Schwefeldioxid durch Oxidation zu Schwefeltrioxid, unter Verwendung z. B von konventionellen Vanadiumpentoxidkatalysatoren mit oder ohne Cäsium mit einem hohen Umsatz (> 90 %) in einem Apparat zu verarbeiten, bei gleichzeitig hoher Flexibilität in Bezug auf die Eingangskonzentrationen an Schwefeldioxid. Ein weiterer großer Vorteil des erfindungsgemäßen Verfahrens ist seine Umweltfreundlichkeit. Bei Verwendung eines geeigneten Endgasreinigungsverfahrens kann das SO$_2$ nahezu zu 100 % zu Schwefelsäure umgesetzt werden.

Bei Ausgangsgasen mit einer Schwefeldioxidkonzentration größer als 5 Vol. % kann der Katalysator durch kontinuierliche Wärmeabfuhr über den indirekten Kühlkreislauf auf eine für die Reaktion günstige Temperatur von 420 °C bis 600 °C gehalten werden. Es werden gegenüber herkömmlichen Verfahren auch über die 13,5 Vol. % SO$_2$-Grenze hinaus keine Verdünnungsgase mehr eingesetzt.

Eine Überhitzung des Katalysators wird über alle Betriebszustände durch die Dimensionierung des Röhrenkontaktapparates, einer ausreichenden Kühlleistung und Verdünnung des Katalysators mit Inertmaterial sicher erreicht. Ein weiterer Vorteil ist also gegenüber herkömmlichen Verfahren, dass bei unveränderten Volumenströmen durch die gesamte Kontaktanlage entsprechend größere Mengen an Schwefelsäure generiert werden können, bzw. sich die Kapazität der vorgeschalteten Produktionsanlage erhöhen lässt.

Bei Ausgangsgase mit größer als 5 Vol. % Schwefeldioxid über den quasi-isotherm betriebenen Röhrenkontaktapparat ermöglicht das erfindungsgemäße Verfahren, Schwefeldioxid durch Oxidation zu Schwefeltrioxid unter Verwendung von z. B. konventionellen Vanadiumpentoxid Katalysatoren mit oder ohne Cäsium mit hohem Umsatz (> 90 %) in einem Apparat zu verarbeiten, mit dem Vorteil hoher Flexibilität in Bezug auf die Eingangskonzentrationen an Schwefeldioxid.

Ein weiterer Vorteil des erfindungsgemäßen Verfahrens besteht dann, wenn eine bestehende Anlage nach dem Doppelkontaktverfahren in Bezug auf den Schwefeldioxidumsatz durch Anhebung der $SO_2$-Eintrittskonzentration auf deutlich über 13,5 Vol. % erweitert werden soll.

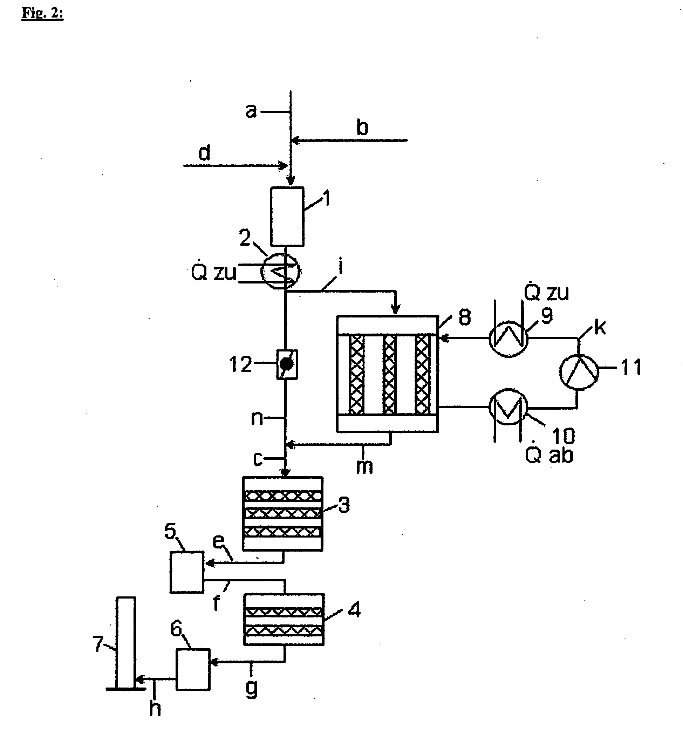

In einer besonderen Ausführungsform des Verfahrens kann ein Teilstrom durch Vorschaltung eines Quasi-Isotherm betriebenen Röhrenkontaktapparates derart behandelt werden, dass nach Wiedervereinigung beider Teilströme eine $SO_2$-Konzentration von unter 13 Vol. % $SO_2$ entsteht (Bypass-Schaltung, Fig. 2). Das mit dem erfindungsgemäßen Verfahren vorbehandelte Gas kann dann erfolgreich in der klassischen Doppelkontaktanlage weiterbehandelt werden.

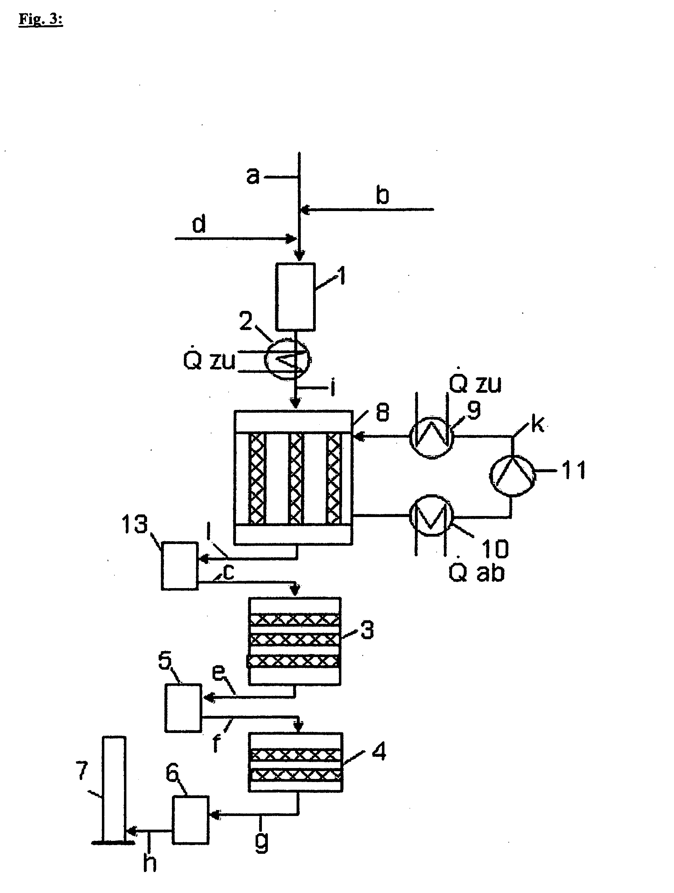

In einer weiteren Ausführungsform des Verfahrens kann einer konventionellen Doppelkontaktanlage ein Röhrenkontaktapparat in Reihe (d. h. ohne Bypass, wie z. B. in Fig. 3 dargestellt) vorgeschaltet werden.

Üblicherweise können Kontaktgase mit einem Schwefeldioxidgehalt von 13,5 bis 30 Vol. %, vorzugsweise zwischen 15 und 25 Vol. % im Röhrenkontaktapparat zugeführt werden. Sollen höhere $SO_2$-Eingangskonzentrationen z. B. von 30 bis 66 Vol. % im Röhrenkontaktapparat verarbeitet werden, so wird abhängig von der Gaszusammensetzung am Eingang vorzugsweise dem Eingangsstrom Luft- und/oder technischen Sauerstoff beigegeben. Dabei beträgt üblicherweise das Verhältnis von $O_2$ zu $SO_2$ im Kontaktgas 0,5 bis 1,2 und noch bevorzugter von 0,7 bis 0,9.

Wird der Röhrenkontaktapparat einer klassischen Doppelkontaktanlage vorgeschaltet, wird der Prozess durch Sollwertregelung des Kühlkreislaufs so geführt, dass die den Apparat verlassenden Gase bezüglich der $SO_2$-Konzentration so eingestellt sind, dass die Bedingungen der nachgeschalteten Hauptkontaktstufen, ($SO_2$-Konzentration <13 Vol. %) erfüllt sind. Die Gase werden dabei vorzugsweise in einem Vorabsorber gemäß dem Stand der Technik wenigstens teilweise vom Schwefeltrioxid befreit, ehe sie in die erste Hauptkontaktstufe zur weiteren Oxidation des Schwefeldioxids geleitet werden. Bei dieser Verfahrensführung werden die Hauptkontakte üblicherweise wie bei den herkömmlichen Verfahren betrieben. So kann eine herkömmliche Anlage zu einer flexiblen Produktionsanlage mit höherer Kapazität und geringem Investitionsaufwand verbessert werden.

Die Erfindung ermöglicht die direkte Produktion von Oleum 35 % und Oleum 65% unter Wegfall einer Destillationsstufe und durch Teilkondensation die Herstellung von Oleum 100 %.

Anhand von Ausführungsbeispielen und zugehörigen Prinzipschaltbildern wird die Erfindung näher erläutert. Die Erfindung wird dabei durch sämtliche Beschreibungen und/oder bildlich dargestellte Einzelheiten erfasst, ohne sich darauf zu begrenzen.

**Figuren:**

Fig. 1    zeigt das Schema eines Verfahrens nach dem Stand der Technik, wobei ein Gas enthaltend 5 bis 13 Vol. % $SO_2$ über eine erste Hauptkontaktstufe, Zwischenabsorption, zweite Hauptkontaktstufe und anschließender Endabsorption über einen Kamin abgegeben wird.

Fig. 2    zeigt eine Anlage zur Durchführung des erfindungsgemäßen Verfahrens im Fall eines Gases enthaltend etwa 13 - 30 Vol. % $SO_2$ durch Teilumwandlung im Röhrenkontaktapparat und ggf. anschließender Vorabsorption sowie anschließende Vermischung mit dem Restgas zu einem Volumenstrom mit einer $SO_2$- Mischkonzentration < 13 Vol. % für die anschließende Bearbeitung eines Restgases in einer Hauptkontaktanlage. (Beispiel 1).

Fig. 3    zeigt eine Anlage zur Durchführung des erfindungsgemäßen Verfahrens im Fall eines Gases enthaltend viel mehr als 13 Vol. % $SO_2$, insbesondere bevorzugt in einem Bereich von 30 bis 66 Vol. % $SO_2$, mit Röhrenkontaktapparat ggf. mit Zusatzluft oder -sauerstoff und anschließender Vorabsorption für die anschließende Bearbeitung eines Restgases < 13 Vol. % $SO_2$ in einer Hauptkontaktanlage (Beispiel 2).

Fig. 4    zeigt eine Anlage zur Durchführung des erfindungsgemäßen Verfahrens, wobei ein Gas enthaltend 5-30 Vol. % $SO_2$ über einen Röhrenkontaktapparat, einen Oleum/Zwischenabsorber, einen Hauptkontakt und nach anschließender Endabsorption über einen Kamin angegeben wird.

Fig. 5    zeigt eine Anlage zur Durchführung des erfindungsgemäßen Verfahrens, wobei ein Gas enthaltend < 5 Vol. % $SO_2$ über einen Röhrenkontaktapparat, einem Endabsorber und anschließendem Wäscher endgereinigt über einen Kamin abgegeben wird.

Liste der Bezugzeichen:

| | |
|---|---|
| 1 | Gastrockner |
| 2 | Gasvorwärmer |
| 3 | Erster Hauptkontakt |
| 4 | Zweiter Hauptkontakt |
| 5 | Oleum/Zwischenabsorber |
| 6 | Endabsorber |
| 7 | Kamin |
| 8 | Röhrenkontaktapparat (quasi-isotherm-betrieben - QIK) |
| 9 | Erhitzer |
| 10 | Kühler |
| 11 | Gebläse / Pumpe |
| 12 | Regelklappe |
| 13 | Vorabsorber |
| 14 | Abluftwäscher |

| | |
|---|---|
| a | Gasleitung am Prozesseintritt |
| b | Leitung Verdünnungsluft |
| c | Gasleitung zum ersten Hauptkontakt |
| d | Leitung Sauerstoff (technisch) |
| e | Gasleitung zum Oleum/Zwischenabsorber |
| f | Gasleitung zum zweiten Hauptkontakt |
| g | Gasleitung zum Endabsorber |
| h | Gasleitung zum Kamin |
| i | Gasleitung zum Röhrenkontaktapparat |
| j | Gasleitung zum Abluftwäscher |
| k | Kreisleitung Kühlung / Erhitzer |
| l | Gasleitung zum Vorabsorber |
| m | Gasleitung aus Röhrenkontaktapparat zum Mischpunkt |
| n | Gasleitung im Bypass Röhrenkontaktapparat zum Mischpunkt |

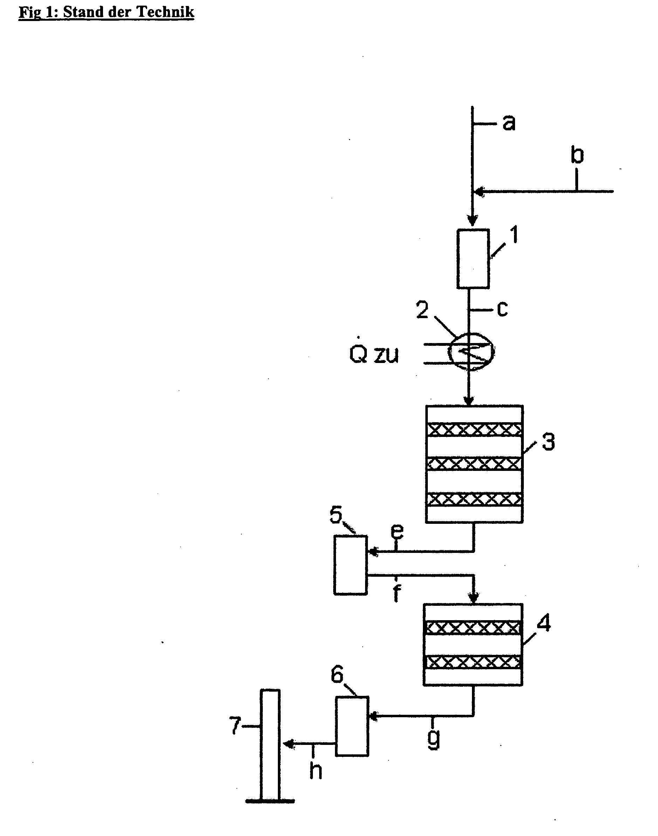

In **Fig. 1** ist eine Anlage nach dem sogenannten Doppelkontaktverfahren zur Herstellung von Schwefelsäure gemäß dem Stand der Technik dargestellt (siehe auch Ullmann's Encyclopedia of Industrial Chemistry).

Sie besteht aus einem Gastrockner **1,** einem Gasvorwärmer **2,** einem ersten Hauptkontakt **3** mit bis zu drei Katalysatorhorden, einem Oleum/Zwischenabsorber **5,** einem zweiten Hauptkontakt **4** mit bis zu zwei Katalysatorhorden und einem Endabsorber **6.**

Das Abgas wird über Kamin **7** an die Umgebung abgegeben.

Die Reaktion von $SO_2 + \frac{1}{2} O_2$ zu $SO_3$ an eingesetzte Katalysatoren, üblicherweise auf Basis Vanadiumpentoxid mit oder ohne Cäsium ist exotherm, so dass zwischen den einzelnen Katalysatorhorden Wärmetauscher (in den Bildern nicht dargestellt) angeordnet sind, die die austretenden Prozessgase auf eine für die jeweilig folgende Prozessstufe notwendige Eintrittstemperatur abkühlen.

Ausgangsgas mit weniger als 13,5 Vol. % $SO_2$ wird über die Leitung a herangeführt und vor Eintritt in den Gastrockner **1** mit herangeführter Luft über Leitung **b** bezüglich der $SO_2$-Konzentration auf< 13 Vol. % $SO_2$ verdünnt.

Die getrocknete Gasmischung wird anschließend in dem Gasvorwärmer **2** auf die erforderliche Eintrittstemperatur der ersten Katalysatorhorde vorgewärmt und über die Leitung **c** dem ersten Hauptkontakt **3** zugeführt, in dem in nacheinander bis zu drei Katalysatorhorden mit Zwischenkühlung die exotherme Oxidationsreaktion abläuft. Das austretende Gas wird über die Leitung **e** einem Oleum/Zwischenabsorber **5** zugeführt. Hier wird der überwiegende Teil des im ersten Hauptkontakt **3** gebildeten Schwefeltrioxid mit den Wasseranteilen im Umpumpkreislauf des Oleum/Zwischenabsorbers **5** unter Bildung von Schwefelsäure absorbiert. Das Gas wird anschließend über die Leitung **f** in den zweiten Hauptkontakt **4** geleitet, indem in nacheinander bis zu zwei Katalysatorhorden die weitere exotherme Oxidationsreaktion abläuft. Anschließend wird das Gas über die Leitung **g** dem Endabsorber **6** zugeführt, in dem das restliche gebildete Schwefeltrioxid unter Bildung von Schwefelsäure absorbiert wird.

Über die Leitung **h** wird das Abgas dem Kamin **7** zugeführt und verlässt hier die Anlage. Die in dem Oleum/Zwischenabsorber **5** und Endabsorber **6** erzeugte Schwefelsäure wird aus der Anlage ausgeschleust.

### Beispiele:

### Beispiel 1:

Fig 2 stellt ein erstes Ausführungsbeispiel des erfindungsgemäßen Verfahrens zur Teilgasbehandlung von Ausgangsgasen mit mehr als 13,5 Vol. % Schwefeldioxid mit Hilfe einer Bypassschaltung dar. Zusätzlich zu den Anlageteilen aus Fig. 1 ist in dieser Ausführung eine Gasaufteilung nach einem Gastrockner **1** vorgesehen. Ein Teilstrom wird dabei über den Röhrenkontaktapparat (QIK) **8** geführt, während der verbleibende Restgasstrom eingestellt über die Drosselklappe **12** zur Einstellung der Schwefeldioxidkonzentration auf < 13 Vol % vor Eintritt in den ersten Hauptkontakt 3 am Mischpunkt in der Gasleitung c geführt wird. Der Röhrenkontaktapparat (QIK) **8** ist mit einem indirekt betriebenen Kühl- und/oder Aufheizerkreislauf bestehend aus dem Kühler **10,** Gebläse oder Pumpe **11** und/oder Anheizer **9** ausgeführt.

Ausgangsgas mit 13 bis 30 Vol.% $SO_2$ vorzugsweise zwischen 15 und 25 Vol.% $SO_2$ wird über die Leitung **a** herangeführt und vor Eintritt in den Gastrockner **1** sofern erforderlich mit herangeführter Luft über Leitung **b** oder technischem Sauerstoff über Leitung **d** bezüglich des für die vollständige Oxidation des $SO_2$ zu $SO_3$ erforderlichen $SO_2/O_2$ Verhältnis eingestellt.

Die getrocknete Gasmischung wird anschließend in dem Gasvorwärmer **2** auf die erforderliche Eintrittstemperatur der ersten Katalysatorhorde des Hauptkontakts **3** und des Röhrenkontaktapparat (QIK) **8** vorgewärmt und im Teilstrom über die Leitung **i** dem Röhrenkontaktapparat (QIK) **8** zugeführt. Die Gasteilung wird über die Drosselklappe **12** so eingestellt, dass die Mischung aus dem den Röhrenkontaktapparat (QIK) **8** über die Leitung **m** verlassenden Gases mit den im Bypass über Leitung **n** geführten Gasen im Mischungspunkt in der Leitung c eine Schwefeldioxidkonzentration von < 13 Vol % erreicht, ehe diese Gase der ersten Hauptkontaktstufe **3** zugeführt werden. Von hier aus wird das Gas wie in Fig. 1 beschrieben in den folgenden Anlagenteilen gemäß dem Stand der Technik weiterverarbeitet.

Der Röhrenkontaktapparat (QIK) **8** ist mit einem indirekten Kühl- **10** und / oder Anheizkreislauf **11** ausgerüstet und wird so betrieben, dass sich am Katalysator eine optimale Temperatur für die exotherme Oxidationsreaktion einstellt. Diese liegt bei Einsatz eines Vanadiumpentoxidkatalysators bei etwa 420 °C bis maximal 640 °C. Unter Erfassung der Eintrittsbedingungen des Röhrenkontaktapparates (QIK) **8** in der Leitung **i** (Volumenstrom, Schwefeldioxidgehalt und Eintrittstemperatur) werden die Bedingungen im Kühlkreislauf so eingestellt, dass der Katalysator an keiner Stelle den schädlichen Grenzwert von 640 °C überschreitet. Bevorzugt werden die Bedingungen so eingestellt, dass sich das einstellende Temperaturprofil über die Rohrlänge so einstellt, dass die Eintrittstemperatur bei etwa 420 °C, die Austrittstemperatur bei etwa 430 °C und ein Temperaturmaximum bei nicht höher als 580 °C liegen.

Bis zu einer Eintrittskonzentration von etwa 8 Vol. % $SO_2$ geht die Gesamtgasmenge direkt zum Hauptkontakt **3** während sich der Röhrenkontaktapparat (QIK) **8** im warmen Bereitschaftszustand befindet.

Die aus dem Kühlkreislauf betrieben im Bereich von etwa 220 °C bis 550 °C bevorzugt im Bereich von 350 °C bis 450 °C abzuführende Wärme wird über den Wärmetauscher **10** bevorzugt als Niederdruckdampf zur weiteren betrieblichen Verwendung ausgekoppelt.

Der Anheizer in diesem Ausführungsbeispiel bietet den Vorteil, dass bei Anfahr- und Übergangsbetriebszuständen mit Schwefeldioxidkonzentrationen von < 5 Vol % in der ausschließlichen Bypassfahrweise unter Aufrechterhaltung einer Katalysatortemperatur von etwa 450 °C ein Umsatz von deutlich > 92 % erreicht wird und somit für diese Betriebszustände zu sehr geringen Kosten eine maßgebliche Verbesserung der Umweltbelastung erreicht wird. Ein weiterer Vorteil dieses Ausführungsbeispiels im Vergleich zum Stand der Technik so wie im Fig. 1 dargestellt ist, dass bei einem unveränderten Gasvolumenstrom eine mehr als 50 % höhere Schwefeldioxidmenge zu Schwefelsäure verarbeitet werden kann mit der positiven Folge den vorgeschalteten Prozess (zum Beispiel Metallherstellung) in der Kapazität um mehr als 50 % erhöhen zu können unter Beibehaltung der bestehenden Anlagen. Gleichzeitig können für Anfahr- und Übergangsbetriebszuständen eine maßgebliche Verbesserung der Umweltbelastung erreicht werden. Der Aufwand für die erfindungsgemäße Nachrüstung umfasst lediglich die Installation des Röhrenkontaktapparates (QIK) 8 einschließlich des zugehörigen indirekten Kühlkreislaufs. Die Kosten hierfür liegen deutlich unter den vergleichbaren Kosten für eine Neuanlage mit vergleichbarer Leistung gemäß dem Stand der Technik. Ein weiterer Vorteil ist die Senkung der Betriebskosten durch die größere Menge hergestellter Schwefelsäure und die Auskopplung zurück gewonnener thermischer Energie. Für Nachrüstprojekte liegt ein weiterer Vorteil in der Bypassanordnung. Die bestehende Anlage kann jederzeit autark weiterbetrieben werden und die Montagezeit (Umschluss) ist auf wenige Tage beschränkt.

### Beispiel 2:

Fig. 3 zeigt im Unterschied zu der in Fig. 2 beschriebenen Anlage des erfindungsgemäßen Verfahrens die Schaltung des Röhrenkontaktapparates (QIK) **8** in Reihenschaltung. Es umfasst nun zusätzlich einen Vorabsorber **13.** Das Gas aus dem Gastrockner **1** wird nach Vorwärmung über den Gasvorwärmer **2** vollständig in den Röhrenkontaktapparat (QIK) **8** geführt. Die Drosselklappe **12** und die Bypassleitung entfallen. Diese Ausführungsvariante hat ihre Vorzüge für Ausgangsgase mit sehr hohen $SO_2$ Eintrittskonzentrationen im Bereich 13 bis 66 Vol. % $SO_2$. Das im Röhrenkontaktapparat (QIK) **8** gebildete Schwefeltrioxid wird mit den Wasseranteilen im Umpumpkreislauf des Vorabsorbers **13** unter Bildung von Schwefelsäure absorbiert. Das Gas wird anschließend über die Leitung c in den ersten Hauptkontakt **3** geleitet.

Für sehr hohe Schwefeldioxideintrittskonzentrationen muss gemäß den Ausführungen in Fig. 1 technischer Sauerstoff zugegeben werden. Für die Prozessführung wird hinter dem Röhrenkontaktapparat (QIK) **8** eine Schwefeldioxidmessung installiert, mit welcher der Temperatursollwert im Kühlkreislauf des Röhrenkontaktapparates derart voreingestellt wird, dass der Reaktionsverlauf am Austritt dieses Apparates eine Schwefeldioxidkonzentartion von 5 Vol. % bis 13, 5 Vol. % bevorzugt 8 Vol. % bis 12 Vol. % sicherstellt.

Vorteile dieser Ausführungsvariante sind insbesondere aber nicht ausschließlich für bestehende Anlagen die Verringerung der Betriebskosten durch Erhöhung der Kapazität der vorgeschalteten Produktionsanlage bei niedrigen Investitionskosten und Produktion von grösseren Mengen Schwefelsäure und Niederdruckdampf. Zusätzlich bietet diese Ausführung aufgrund der hohen $SO_3$-Konzentration hinter dem Röhrenkontaktapparat (QIK) **8** am Eintritt des Vorabsorbers **13** die Möglichkeit zur direkten Herstellung von Oleum mit hohem Gehalt (> 35 %) an freiem $SO_3$. Dies ist für Anlagen nach dem Stand der Technik nur möglich mit aufwendigen Zusatzanlagen.

### Beispiel 3:

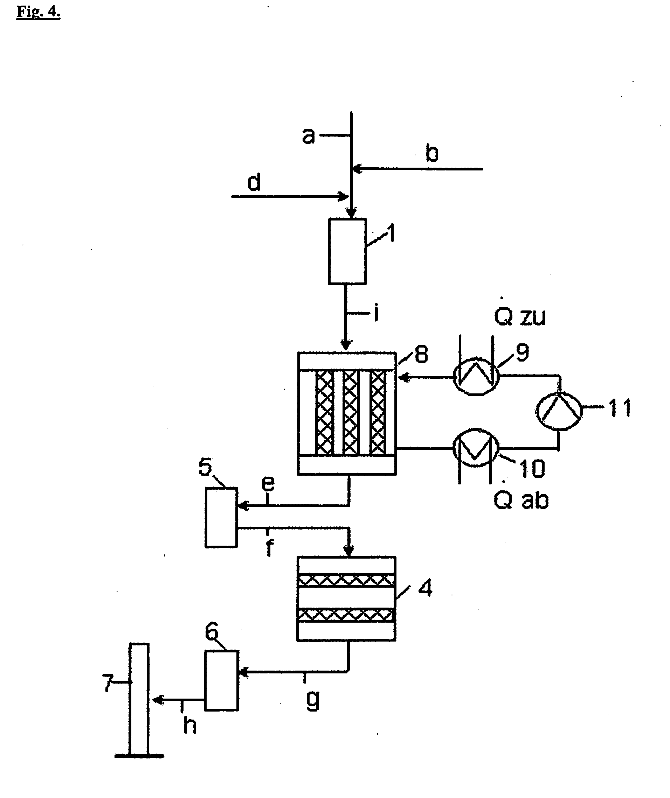

Fig. 4 zeigt im Unterschied zu der im Ausführungsbeispiel 2 (Fig.3) beschriebenen Anlage des erfindungsgemäßen Verfahrens die Schaltung des Röhrenkontaktapparates (QIK) **8** in Reihenschaltung ohne Vorabsorber **13** und ersten Hauptkontakt **3**. Das Gas aus dem Gastrockner 1 wird nach Vorwärmung über den Gasvorwärmer **2** vollständig in den Röhrenkontaktapparat (QIK) **8** geführt. Das Gas wird anschließend über die Gasleitung e zum Oleum/Zwischenabsorber geführt. Die Regelung der Schwefeldioxidkonzentration nach Röhrenkontaktapparat (QIK) **8** erfolgt wie unter Ausführungsbeispiel Fig. 3 beschrieben.

Diese Ausführungsvariante hat ihre Vorzüge für Ausgangsgase mit Schwefeldioxid-konzentrationen im Ausgangsgas von 5 bis 30 Vol. %. Vorteile dieser Ausführungsvariante sind die hohe Flexibilität in Bezug auf die Eingangskonzentration an Schwefeldioxid und die bei hohen Eingangskonzentrationen spezifisch niedrigen Betriebskosten durch relativ niedrige Investitionskosten, hohe Schwefelsäureproduktion und große wieder verwendbare thermische Energie (z. B. Niederdruckdampf).

### Beispiel 4:

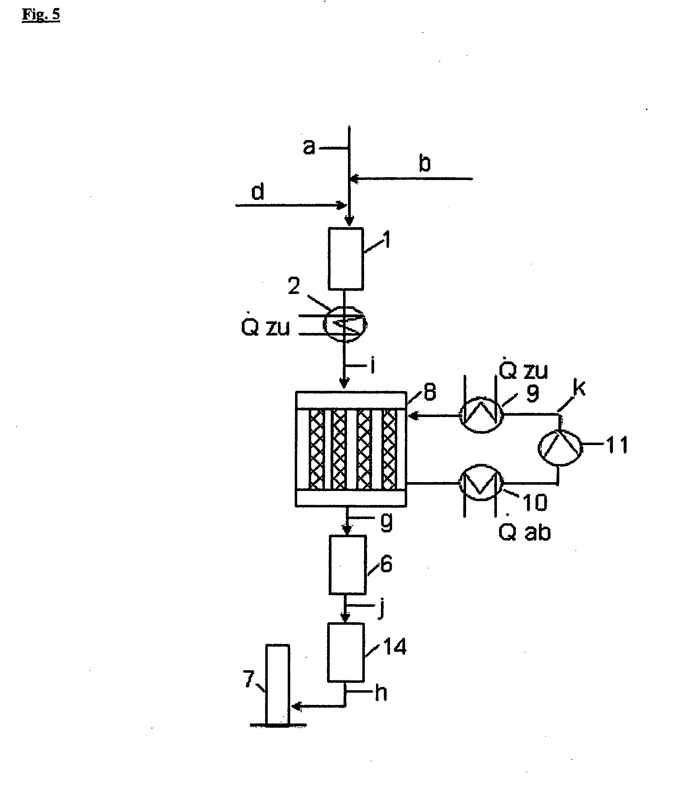

Fig. 5 zeigt im Unterschied zu der im Ausführungsbeispiel 3 (Fig. 4) beschriebenen Anlage des erfindungsgemäßen Verfahrens die Schaltung des Röhrenkontaktapparates (QIK) **8** in Reihenschaltung ohne Oleum/Zwischenabsorber **5** und zweiten Hauptkontakt **4.** Das Gas aus dem Gastrockner **1** wird nach Vorwärmung über Gasvorwärmer **2** vollständig in den Röhrenkontaktapparat (QIK) **8** geführt. Das Gas wird anschließend über die Gasleitung **e** zum Endabsorber **6** geführt. Über die Leitung **j** gelangt das Gas anschließend zur Endreinigung in die Gaswaschanlage **14,** ehe es über die Leitung **h** und Kamin **7** an die Umgebung abgegeben wird.

Diese Ausführungsvariante hat ihre Vorzüge insbesondere für Ausgangsgase mit Schwefeldioxidkonzentrationen im Ausgangsgas von weniger als 5 Vol. % . Vorteil dieser Ausführungsvariante ist es, dass es nunmehr mit dem erfindungsgemäßen Verfahren möglich wird, auch für Ausgangsgase mit geringen Konzentrationen an Schwefeldioxid die Oxidation zu Schwefeltrioxid unter Verwendung von z. B. konventionellen Vanadiumpentoxid Katalysatoren mit oder ohne Cäsium mit hohem Umsatz (> 90 %) zu erreichen, bei gleichzeitig hoher Flexibilität in Bezug auf die Eingangskonzentration an Schwefeldioxid. Der nicht umgesetzte Anteil an Schwefeldioxid wird in einer Endgaswäsche z. B. katalytisch an nasser Aktivkohle oder anderen gängigen Verfahren auf die geforderten gesetzlichen Emissionsgrenzwerte endgereinigt.

### Simulationen:

Mit einem mathematischen Simulationsmodell, dass erfindungsgemäß ein Einzelrohr des Röhrenkontaktapparates mit einer quasi-isothermen Prozessführung abbildet, wird gezeigt, dass sich für den beanspruchten Bereich von Schwefeldioxidgehalten zwischen 0,1-66 -Vol. % mit dem erfindungsgemäßen Röhrenkontaktapparat innerhalb der beanspruchten Prozessfenster überraschenderweise die gewünschten Umsätze oberhalb von 85 %, vorzugsweise oberhalb von 92% erzielen lassen.

Die Reaktion von Schwefeldioxid zum Schwefeltrioxid an einem $V_2O_5$-Katalysator wird dabei durch den folgenden vereinfachten kinetischen Ansatz beschrieben:

$$R = \frac{k_{10} \cdot e^{\left(\frac{-E_A}{R \cdot T} + B_0\right)} \cdot p \cdot y_{SO_2}}{\left(y_{SO_2} + k_2 \cdot y_{SO_3}\right)} \cdot \left(1 - \frac{Q_R}{K_P}\right).$$

Hierbei ist $Q_R$ der Reaktionsquotient und $K_P$ die Gleichgewichtskonstante der Reaktion. Dieser Ansatz ist z. B. beschrieben in folgenden Literaturquellen ("Rate Equations of Solie-Catalyzed Reactions", Edt. Reiji Mezaki, Hakuai Inoue, University Tokyo Press, 1990, S. 1-11). Hierbei wurden folgende Werte für die einzelnen Konstanten genommen $E_A$ = 92084 J/mol, $B_0$ = 15,1 J/mol und $k_2$ = 0,8.

Als Katalysator wird der $V_2O_5$-Katalysator auf einem Träger $SiO_2$ der Firma BASF des Typs 04-110 verwendet. Für diesen Katalysator wurden der Wert $k_{10}$ =1,3E-5 mol/(g-Katalysator s bar gefunden.

Das Einzelrohr hatte einen Innendurchmesser von 60,9 mm und eine Länge von 4 m. Es ist mit dem $V_2O_5$-Katalysator gemischt mit dem inerten Katalysatorträgermaterial als Inertmaterial gefüllt.

### Simulation 1:

In einer ersten Simulation wurde das Einzelrohr mit einer Mischung aus Inertmaterial zu Katalysator im Verhältnis 72,5 : 27,5 ($m^3$:$m^3$) gefüllt. Das Außenrohr wurde mit Luft gekühlt, mit einer Eintrittstemperatur von 410 °C und einer Austrittstemperatur von 435 °C. Das Eingangsgas aus Schwefeldioxid zusammen mit Sauerstoff, Stickstoff und Kohlendioxid strömte bei einem Druck von 1,4 bar in das Einzelrohr, die spezifischen Massenströme betrugen dabei 2,09 g-$N_2$/s/kg-Katalysator, 1,06 g-$CO_2$/s/kg-Katalysator, 0,31 g-$SO_2$/s/kg-Katalysator (4 Vol. %) und 0,15 g-$O_2$/s/kg-Katalysator. Die Eintrittstemperatur betrug 420 °C, die Austrittstemperatur 436°C und die maximale Temperatur 469°C. Der Umsatz am Rohraustritt von Schwefeldioxid zu Schwefeltrioxid betrug rechnerisch 99,7%.

### Simulation 1a:

In einer weiteren ersten Simulation wurde das Einzelrohr mit einer Mischung aus Inertmaterial zu Katalysator im Verhältnis 82 : 18 ($m^3$:$m^3$) gefüllt. Das Außenrohr wurde mit Luft gekühlt, mit einer Eintrittstemperatur von 450 °C. Das Einganggas aus Schwefeldioxid zusammen mit Sauerstoff, Stickstoff und Kohlendioxid strömte bei einem Druck von 1,2 bar in das Einzelrohr, die spezifischen Massenströme betrugen dabei 2,10 g-$N_2$/s/kg-Katalysator, 1,40 g-$CO_2$/s/kg-Katalysator, 1,12 g-$SO_2$/s/kg-Katalysator (12,0 Vol. %) und 0,74 g-$O_2$/s/kg-Katalysator. Die Eintrittstemperatur betrug 380 °C, die Austrittstemperatur 480 °C und die maximale Temperatur 498 °C. Der Umsatz am Rohraustritt von Schwefeldioxid zu Schwefeltrioxid betrug rechnerisch 90 %.

### Simulation 2:

In einer zweiten Simulation wurde das Einzelrohr ist mit einer Mischung aus Inertmaterial zu Katalysator im Verhältnis 72,5 : 27,5 ($m^3$:$m^3$) gefüllt. Das Außenrohr wurde mit Luft mit einer Eintrittstemperatur von 380°C und eine Austrittstemperatur von 478°C gekühlt. Schwefeldioxid strömte zusammen mit Sauerstoff, Stickstoff und Kohlendioxid bei einem Druck von 1,4 bar in das Einzelrohr, die spezifischen Massenströme betrugen dabei 1,02 g-$N_2$/s/kg-Katalysator, 0,85 g-$CO_2$/s/kg-Katalysator, 1,24 g-$SO_2$/s/kg-Katalysator (20 Vol. %) und 0,50 g-$O_2$/s/kg-Katalysator. Die Eintrittstemperatur betrug 400 °C, die Austrittstemperatur 488 °C und die maximale Temperatur 575 °C. Der Umsatz am Rohraustritt von Schwefeldioxid zu Schwefeltrioxid betrug rechnerisch 98,6 %.

### Simulation 2a:

In einer weiteren zweiten Simulation wurde das Einzelrohr mit einer Mischung aus Inertmaterial zu Katalysator im Verhältnis 64,5,5 : 35,5,5 ($m^3$:$m^3$) gefüllt. Das Außenrohr wurde mit Luft mit einer Eintrittstemperatur von 440°C gekühlt. Schwefeldioxid strömte zusammen mit Sauerstoff, Stickstoff und Kohlendioxid bei einem Druck von 1,30 bar in das Einzelrohr, die spezifischen Massenströme betrugen dabei 1,82 g-$N_2$/s/kg-Katalysator, 1,51 g-$CO_2$/s/kg-Katalysator, 1,87 g-$SO_2$/s/kg-Katalysator (18 Vol. %) und 1,05 g-$O_2$/s/kg-Katalysator. Die Eintrittstemperatur betrug 410 °C, die Austrittstemperatur 545 °C und die maximale Temperatur 554 °C. Der Umsatz am Rohraustritt von Schwefeldioxid zu Schwefeltrioxid betrug rechnerisch 92 %.

### Simulation 3:

Das Einzelrohr wurde mit einer Mischung aus Inertmaterial zu Katalysator im Verhältnis 60:40 (m$^3$:m$^3$) gefüllt. Das Außenrohr wurde mit Luft gekühlt (Eintrittstemperatur 350°C, Austrittstemperatur 428°C). Schwefeldioxid strömte zusammen mit Sauerstoff und Stickstoff bei einem Druck von 1,4 bar in das Einzelrohr, die spezifischen Massenströme betrugen dabei 0,26 g-N$_2$/s/kg-Katalysator, 1,71 g-SO$_2$/s/kg-Katalysator (50 Vol. %) und 0,51 g-O$_2$/s/kg-Katalysator. Die Eintrittstemperatur betrug 400 °C, die Austrittstemperatur 442 °C und die maximale Temperatur 575 °C. Der Umsatz am Rohraustritt von Schwefeldioxid zu Schwefeltrioxid betrug rechnerisch 93,0%.

### Simulation 3a:

Das Einzelrohr wurde mit einer Mischung aus Inertmaterial zu Katalysator im Verhältnis 50:50 (m$^3$:m$^3$) gefüllt. Das Außenrohr wurde mit Luft gekühlt (Eintrittstemperatur 430 °C, Schwefeldioxid strömte zusammen mit Sauerstoff und Stickstoff bei einem Druck von 1,3 bar in das Einzelrohr, die spezifischen Massenströme betrugen dabei 1,44 g-N$_2$/s/kg-Katalysator, 1,81 g-SO$_2$/s/kg-Katalysator (25 Vol. %) und 0,94 g-O$_2$/s/kg-Katalysator. Die Eintrittstemperatur betrug 380 °C, die Austrittstemperatur 555 °C und die maximale Temperatur 557 °C. Der Umsatz am Rohraustritt von Schwefeldioxid zu Schwefeltrioxid betrug rechnerisch 82 %.

### Simulation 4:

Das Einzelrohr wurde mit einer Mischung aus Inertmaterial zu Katalysator im Verhältnis 50:50 (m$^3$:m$^3$) gefüllt. Das Außenrohr wurde mit Luft gekühlt (Eintrittstemperatur 425 °C, Schwefeldioxid strömte zusammen mit Sauerstoff und Stickstoff bei einem Druck von 1,38 bar in das Einzelrohr, die spezifischen Massenströme betrugen dabei 2,02 g-N$_2$/s/kg-Katalysator, 1,62 g-SO$_2$/s/kg-Katalysator (20 Vol. %) und 0,94 g-O$_2$/s/kg-Katalysator. Die Eintrittstemperatur betrug 380 °C, die Austrittstemperatur 551 °C und die maximale Temperatur 555 °C. Der Umsatz am Rohraustritt von Schwefeldioxid zu Schwefeltrioxid betrug rechnerisch 87 %.

### Simulation 5:

Die Randbedingungen entsprachen, bis auf die Kühllufteintrittstemperatur, der Simulation 4 . Stellte man nun die Kühllufteintrittstemperatur auf 330°C so ergab sich überraschenderweise eine Austrittskonzentration von SO$_2$ von rechnerisch 10%. Diese letzte Simulation zeigt, dass die Austrittskonzentration mit der Einstellung der Verfahrensparameter kontrolliert werden kann.

Ein wichtiges Ergebnis der numerischen Simulation ist die Festlegung der Konstruktionsmerkmale des Röhrenkontaktapparates, als da sind Rohrduchmesser, Rohrlänge, K-Wert (Spalt zwischen Innen und Außenrohr), die Rohr-in Rohr Konstruktion als Gleichstromkühler.

### Pilotierungen:

Die Erfindung wird nun zusätzlich anhand von Ergebnisses aus der durchgeführten Pilotierung eines Einzelrohrreaktors in einer Bypassanodnung gemäss Fig. 2 in einer bestehenden Schwefelsäureanlage unter realen Bedingungen beschrieben. Es werden dabei die Ergebnisse aus 4 Versuchsreihen gezeigt, welche jedoch keine Einschränkung für das erfmdungsgemäße Verfahren darstellen.

Es wurde hierzu ein Einzelrohrreaktor entwickelt, der in seinen Dimensionen und seiner Betriebsweise dem einzelnen Rohr eines großtechnischen Apparates mit bis zu mehreren tausend Rohren entspricht. Der Vorteil bei dieser Vorgehensweise liegt in einer Minimierung des Scale-up Risikos bei der Übertragung in den großtechnischen Massstab.

Kernstück der Pilotanlage war der Einzelrohrreaktor mit seinem Kühlluft Ein- und Austrittsgehäuse und die als Rohr in Rohrkonstruktion ausgebildete gekühlte Reaktionszone. Das zentrale innere Reaktionsrohr (da = 63,5 x 2,6 mm) war über 4 m Höhe mit Katalysatorschüttung gefüllt. Hier reagierte das im Prozessgas enthaltene S02 unter Wärmefreisetzung zu einem bestimmten Anteil S03 ab. Über die gesamte Reaktionslänge wurde über die im Rohrspalt der Rohr in Rohrkonstruktion im Gleichstrom gekühlt. Auf der Gaseintrittsseite konnte bei Bedarf S02 und Sauerstoff zugegeben werden. Die Gaseintrittstemperatur war einstellbar.

Die zugeführte Gas - und Kühlluft waren sowohl in der Menge wie auch in der Eintrittstemperatur einstellbar. Relevante Gasanalysen, Temperatur- und Druckmessungen wurden erfasst und über eine zentrale Messwerterfassung dokumentiert.

In der Pilotierung wurden folgende Prozessparameter untersucht:

SO2-Eingangskonzentration von 10 - 25 %

Gasvolumenströme von 3 bis 14 Nm3/h
Gaseintrittstemperaturen 360 - 450 °C
Kühllufteintrittstemperaturen 350 - 450 °C
O2/SO2-Verhältnis von 0,8 bis 1,2
Katalysatoranteil in der Schüttung von 18 - 50 %

Tabelle 1

| | Reihe 1 | Reihe 2 | Reihe 3 | Reihe 4 |
|---|---|---|---|---|
| | | | | |
| **Katalysatormischung** | | | | |
| **im Reaktorrohr (Vol.%)** | | | | |
| Standardkatalysator | 18 | 27 | 37,5 | 37,5 |
| Cäsiumkatalysator | | 8,5 | 12,5 | 12,5 |
| Inerte Schüttung | 82 | 64,5 | 50 | 50 |
| | | | | |
| **Gas Eintritt Reaktor** | | | | |
| Volumenstrom (Nm$^3$/h) | 5,3 | 12,2 | 11,5 | 12,1 |
| Konzentrationen: | | | | |
| $SO_2$ (Vol%) | 11,8 | 18,3 | 25,0 | 20,0 |
| $O_2$ (Vol%) | 15,4 | 20,8 | 26,0 | 18,9 |
| Eintrittstemperatur (°C) | 382 | 409 | 374 | 380 |
| Maximale Temperatur (°C) | 504 | 499 | 532 | 517 |
| | | | | |
| | | | | |
| **Gas Austritt Reaktor** | | | | |
| Konzentrationen: | | | | |
| $SO_2$ (Vol%) | 1,7 | 1,1 | 3,2 | 2,3 |
| $O_2$ (Vol%) | 12,5 | 15,7 | 15,7 | 13,5 |
| Austrittstemperatur (°C) | 500 | 491 | 528 | 513 |
| | | | | |
| **Luftkühlung** | | | | |
| | | | | |
| Volumenstrom (Nm$^3$/h) | 40 | 33 | 30 | 30 |
| Eintrittstemperatur (°C) | 454 | 440 | 426 | 425 |
| Austrittstemperatur (°C) | 513 | 506 | 547 | 529 |
| | | | | |
| **Umsatz $SO_2$ (%)** | 85,6 | 94,0 | 87,2 | 88,5 |
| Über das 4 m lange Reaktionsrohr waren 4 Stück Temperaturmessungen mit einem Abstand von jeweils 1 m eingebracht. Das wirklich erreichte Temperatur Maximum zwischen 2 Messstellen lag um bis zu 50 °C höher. | | | | |

Wie in Tabelle 1 dargestellt, konnte in der praktischen Anwendung des erfindungsgemäßen Verfahrens nachgewiesen werden, das gegenüber dem Stand der Technik spezifisch deutlich mehr Schwefelsäure produziert werden kann, bei gegenüber dem Stand der Technik wesentlich höheren SO2 Eingangskonzentrationen, hohem S02 Umsatz in einer Stufe und gutem Regelverhalten der Anlage. Die maximal zulässige Temperatur am Katalysator konnte in allen Fällen durch Einstellen der Kühlleistung und Kühllufteintrittstemperatur sicher eingestellt werden. Die Ergebnisse der Simulation wurden mit hinreichender Genauigkeit bestätigt.

**Patentansprüche**

1. Vorrichtung zur kontinuierlichen katalytischen kompletten oder teilweisen Oxidation eines Ausgangsgases enthaltend Schwefeldioxid und Sauerstoff, umfassend mindestens einen Röhrenkontaktapparat, dem eine oder mehrere Kontaktstufen und ein oder mehrere Absorber nachgeschaltet sind, wobei der Röhrenkontaktapparat ein stehender Wärmetauscher aus mehreren Doppelmantelrohren ist, die ein Innenrohr und ein Außenrohr aufweisen, wobei ein Katalysator in den Innenrohren eingefüllt ist und die Wärmeübertragung um diese Innenrohre durch ein im Gleichstrom geführtes Medium im Zwischenraum aus Innen- und Außenrohr erfolgt.

2. Vorrichtung nach Anspruch 1, **dadurch gekennzeichnet, dass** die Innenrohre einen Nenndurchmesser von 25 mm bis 150 mm bei einer Rohrlänge von 1 m bis 12 m aufweisen.

3. Vorrichtung nach einem der Ansprüche 1 bis 2, **dadurch gekennzeichnet, dass** Luft als Medium eingesetzt wird und dass die Doppelmantelkonstruktion eine Wärmeübertragungszahl von 20 bis 80 $W/m^2K$ zwischen Innenrohr und Kühlmedium ermöglicht.

4. Vorrichtung nach einem der Ansprüche 1 bis 3 **dadurch gekennzeichnet, dass** sie mindestens einem Hauptkontakt in einer Bypassschaltung vorgeschaltet ist und durch eine Drosselklappe das Ausgangsgas in zwei Teilströme aufteilbar ist, von denen ein Teilstrom durch die Vorrichtung geleitet und anschließend mit dem anderen Teilstrom wieder zu einem Hauptstrom zusammenführbar ist und der Hauptstrom einem Hauptkontakt zuführbar ist.

5. Verwendung einer Vorrichtung gemäß einem der Ansprüche 1 bis 4 zur kontinuierlichen katalytischen kompletten oder teilweisen Oxidation eines Ausgangsgases enthaltend Schwefeldioxid und Sauerstoff, **dadurch gekennzeichnet, dass** der Katalysator in den Innenrohren mit einer quasi-isothermen Prozessführung unter Energiezu- oder Energieabfuhr aktiv gehalten wird.

6. Verwendung gemäß Anspruch 5, **dadurch gekennzeichnet, dass** in der einen oder in den mehreren Kontaktstufen bezüglich der chemischen Zusammensetzung der gleiche Katalysator eingesetzt wird wie in den Innenrohren des Röhrenkontaktapparates.

7. Verwendung nach einem der Ansprüche 5 oder 6, **dadurch gekennzeichnet, dass** Ausgangsgase mit einem Gehalt $0,1 < SO_2 < 66$ Vol.-% wenigstens teilweise durch Oxidation mit Sauerstoff am Katalysator zu Schwefeltrioxid umgesetzt werden.

8. Verwendung nach einem der Ansprüche 5 bis 7, wobei der Katalysator zur Optimierung der EnergieAbfuhr mit Inertmaterial versetzt ist.

9. Verwendung nach Anspruch 8, **dadurch gekennzeichnet, dass** der eingesetzte Katalysator in seiner Reaktivität durch Mischen mit dem Inertmaterial im Mengenverhältnis 1:100 bis 100:1 1 voreingestellt wird.

10. Verwendung nach einem Anspruch 8, **dadurch gekennzeichnet, dass** Inertmaterial und Katalysator in Mengenverhältnissen 90:10 bis 40:60 vermischt werden.

11. Verwendung nach einem der Ansprüche 5 bis 10, **dadurch gekennzeichnet, dass** Luft als Medium eingesetzt wird und eine Wärmeübertragungszahl von 20 bis 80 $W/m^2K$ zwischen Innenrohr und Medium eingestellt wird.

12. Verwendung nach einem der Ansprüche 5 bis 11, **dadurch gekennzeichnet, dass** bei $SO_2$-Eingangskonzentrationen von 30 bis 66 Vol.-% dem Ausgangsgas Luft und/oder technischer Sauerstoff derart zugeführt wird, dass das Verhältnis $O_2$ zu $SO_2$ im Gas bezogen auf die Volumenanteile von 0,5 bis 1,2 beträgt.

**13.** Verwendung nach einem der Ansprüche 5 bis 12, **dadurch gekennzeichnet, dass** der Röhrenkontaktapparat einer Doppelkontaktanlage vorgeschaltet ist, und die den Röhrenkontaktapparat verlassenden Gase eine $SO_2$-Konzentration <13 Vol.-% aufweisen.

**14.** Verwendung nach einem der Ansprüche 5 bis 13, **dadurch gekennzeichnet, dass** der Röhrenkontaktapparat einer Doppelkontaktanlage in einer Bypass-Schaltung vorgeschaltet ist und ein Teilstrom in dem Röhrenkontaktapparat derart behandelt wird, dass nach Wiedervereinigung der Teilströme ein Strom mit einer $SO_2$-Konzentration von unter 13 Vol.-% entsteht, der in der Doppelkontaktanlage weiterbehandelt wird.

**Claims**

**1.** Apparatus for the continuous catalytic complete or partial oxidation of a starting gas containing sulphur dioxide and oxygen, which comprises at least one tube contact apparatus which is followed by one or more contact stages and one or more absorbers, where the tube contact apparatus is an upright heat exchanger comprising a plurality of double-walled tubes which have an interior tube and an outer tube, with a catalyst being present in the interior tubes and heat transfer being effected around these interior tubes by means of a medium which is conveyed in cocurrent through the intermediate space between interior and outer tubes.

**2.** Apparatus according to Claim 1, **characterized in that** the interior tubes have a nominal diameter of from 25 mm to 150 mm at a tube length of from 1 m to 12 m.

**3.** Apparatus according to either of Claims 1 and 2, **characterized in that** air is used as medium and **in that** the double-walled construction makes possible a heat transfer number of from 20 to 80 W/m$^2$K between interior tube and cooling medium.

**4.** Apparatus according to any of Claims 1 to 3, **characterized in that** it is installed upstream of at least one main contact in a bypass arrangement and the starting gas can be divided by means of a throttle flap into two substreams of which one substream is passed through the apparatus and can subsequently be combined with the other substream to form a main stream again and the main stream can be fed to a main contact.

**5.** Use of an apparatus according to any of Claims 1 to 4 for the continuous catalytic complete or partial oxidation of a starting gas containing sulphur dioxide and oxygen, **characterized in that** the catalyst in the interior tubes is kept active by means of pseudoisothermal process conditions with introduction of energy or removal of energy.

**6.** Use according to Claim 5, **characterized in that** the same catalyst in terms of the chemical composition as in the interior tubes of the tube contact apparatus is used in the contact stage or in the plurality of contact stages.

**7.** Use according to either of Claims 5 and 6, **characterized in that** starting gases having a content in the range 0.1 < $SO_2$ < 66% by volume are at least partially converted into sulphur trioxide by oxidation by means of oxygen over the catalyst.

**8.** Use according to any of Claims 5 to 7, wherein the catalyst is admixed with inert material to optimize the removal of energy.

**9.** Use according to Claim 8, **characterized in that** the reactivity of the catalyst used is preset by mixing with the inert material in a ratio of from 1:100 to 100:1.

**10.** Use according to Claim 8, **characterized in that** inert material and catalyst are mixed in ratios of from 90:10 to 40:60.

**11.** Use according to any of Claims 5 to 10, **characterized in that** air is used as medium and a heat transfer number of from 20 to 80 W/m$^2$K between interior tube and medium is set.

**12.** Use according to any of Claims 5 to 11, **characterized in that** in the case of $SO_2$ inlet concentrations of from 30 to 66% by volume, air and/or technical-grade oxygen is added to the starting gas in such an amount that the volume ratio of $O_2$ to $SO_2$ in the gas is from 0.5 to 1.2.

**13.** Use according to any of Claims 5 to 12, **characterized in that** a double contact plant is installed upstream of the tube contact apparatus and the gases leaving the tube contact apparatus have an $SO_2$ concentration of < 13% by volume.

14. Use according to any of Claims 5 to 13, **characterized in that** the tube contact apparatus is installed upstream of a double contact plant in a bypass arrangement and a substream is treated in the tube contact apparatus in such a way that recombination of the substreams forms a stream which has an $SO_2$ concentration of less than 13% by volume and is treated further in the double contact plant.

**Revendications**

1. Dispositif d'oxydation catalytique complète ou partielle en continu d'un gaz de sortie contenant du dioxyde de soufre et de l'oxygène,
le dispositif comprenant au moins un appareil tubulaire de contact suivi par un ou plusieurs étages de contact et un ou plusieurs absorbeurs,
l'appareil tubulaire de contact étant un échangeur de chaleur posé debout, constitué de plusieurs tubes à double enveloppe dotés d'un tube intérieur et d'un tube extérieur,
un catalyseur remplissant les tubes intérieurs et le transfert de chaleur autour de ces tubes intérieurs s'effectuant par un fluide guidé à co-courant dans l'espace intermédiaire entre le tube intérieur et le tube extérieur.

2. Dispositif selon la revendication 1, **caractérisé en ce que** les tubes intérieurs ont un diamètre nominal de 25 mm à 150 mm pour une longueur de tube de 1 m à 12 m.

3. Dispositif selon l'une des revendications 1 à 2, **caractérisé en ce qu'**il utilise l'air comme fluide et **en ce que** la structure en double enveloppe permet d'obtenir entre le tube intérieur et le fluide de refroidissement un coefficient de transmission calorifique de 20 à 80 $W/m^2.K$.

4. Dispositif selon l'une des revendications 1 à 3, **caractérisé en ce qu'**il est raccordé en amont d'au moins un contact principal dans un circuit de dérivation, le gaz de sortie pouvant être divisé par un clapet d'étranglement en deux écoulements partiels dont un écoulement partiel traverse le dispositif et peut ensuite être réuni à l'autre écoulement partiel pour former un écoulement principal, l'écoulement principal pouvant être amené à un contact principal.

5. Utilisation d'un dispositif selon l'une des revendications 1 à 4 pour l'oxydation catalytique complète ou partielle en continu d'un gaz de sortie contenant du dioxyde de soufre et de l'oxygène, **caractérisée en ce que** le catalyseur est maintenu actif dans les tubes intérieurs en conduisant le processus en conditions quasi isothermes par apport ou évacuation d'énergie.

6. Utilisation selon la revendication 5, **caractérisée en ce que** le catalyseur utilisé dans l'étage ou les étages de contact a la même composition chimique que celui qui remplit les tubes intérieurs de l'appareil tubulaire de contact.

7. Utilisation selon l'une des revendications 5 ou 6, **caractérisée en ce qu'**il convertit en trioxyde de soufre les gaz de sortie dont la teneur en dioxyde de soufre vérifié $0,1 < SO_2 < 66$ % en volume, au moins en partie par oxydation à l'oxygène.

8. Utilisation selon l'une des revendications 5 à 7, dans laquelle le catalyseur est additionné de matériau inerte pour optimiser l'évacuation d'énergie.

9. Utilisation selon la revendication 8, **caractérisée en ce que** la réactivité du catalyseur utilisé est pré-réglée en le mélangeant avec le matériau inerte dans des proportions de 1:100 à 100:1.

10. Utilisation selon la revendication 8, **caractérisée en ce que** le matériau inerte et le catalyseur sont mélangés dans des proportions de 90:10 à 40:60.

11. Utilisation selon l'une des revendications 5 à 10, **caractérisée en ce qu'**il utilise l'air comme fluide et **en ce qu'**un coefficient de transmission calorifique de 20 à 80 $W/m^2.K$ est établi entre le tube intérieur et le fluide.

12. Utilisation selon l'une des revendications 5 à 11, **caractérisée en ce que** pour des concentrations initiales en $SO_2$ de 30 à 66 % en volume, de l'air et/ou de l'oxygène technique sont apportés au gaz de sortie de telle sorte que le

rapport volumique entre $O_2$ et $SO_2$ dans le gaz en proportion volumique soit de 0,5 à 1,2.

13. Utilisation selon l'une des revendications 5 à 12, **caractérisée en ce que** l'appareil tubulaire de contact est précédé par une installation de contact double et **en ce que** les gaz qui quittent l'appareil tubulaire de contact présentent une concentration en $SO_2$ < 13 % en volume.

14. Utilisation selon l'une des revendications 5 à 13, **caractérisée en ce que** l'appareil tubulaire de contact est précédé par une installation de contact double raccordée en dérivation et **en ce qu'**un écoulement partiel est traité dans l'appareil tubulaire de contact de telle sorte qu'après réunion des écoulements partiels, on obtienne un écoulement dont la concentration à $SO_2$ est inférieure à 13 % en volume et dont le traitement est poursuivi dans l'installation à contact double.

**Fig 1: Stand der Technik**

**Fig. 2:**

**Fig. 3:**

**Fig. 4.**

**Fig. 5**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE OS2026818 A
- DE 10249782
- GB 1504725 A

### In der Beschreibung aufgeführte Nicht-Patentliteratur

- Rate Equations of Solie-Catalyzed Reactions. University Tokyo Press, 1990, 1-11